# EUROPEAN PATENT APPLICATION

(11) **EP 2 866 142 A1**
(43) Date of publication of application: **29.04.2015**
(21) Application number: 13806884.6
(22) Date of filing: 25.06.2013
(51) Int. Cl.: G06F 9/45

(54) **UPGRADE PACKAGE GENERATION METHOD AND DEVICE, DYNAMIC FILE DIFFERENTIAL UPGRADE METHOD AND TERMINAL**

(30) Priority: 25.06.2012 CN 201210209785
(71) Applicant: ZTE Corporation, Shenzhen, Guangdong 518057 (CN)
(72) Inventor: LAI, Li, Shenzhen Guangdong 518057 (CN)
(74) Representative: Ahmad, Sheikh Shakeel
(86) International application number: PCT/CN2013/077868
(87) International publication number: WO 2013/189312

(57) **Abstract**

An upgrade package generation method and device, a dynamic file differential upgrade method and terminal, wherein, the upgrade package generation method includes: generating a dynamic file upgrade package according to dynamic files which need to be upgraded, wherein the dynamic file upgrade package comprises file name information, path information, and upgrade content information of each dynamic file which needs to be upgraded; and packing the dynamic file upgrade package into an upgrade package.

## Description

### Technical Field

The present invention relates to remotely managing a terminal device using an over-the-air interface technology, and more particularly, to a dynamic file differential upgrade method and terminal, as well as an upgrade package generation method and device.

### Background of the Invention

With faster and faster speed of new applications from terminal manufacturers, the period for an operator launching new services becomes shorter and shorter. The OTA DM (Over the Air Device Management), as a simple, fast and effective upgrade mode for a terminal device, is used more and more frequently by the operators in the actual commercialization. There are more and more application scenarios in which the Firmware Update Over the Air (FOTA) is used at the time of actually upgrading by the operator, upgrade schemes are increasingly enriched, and upgrade requirements are becoming increasingly complex, in which, it also contains the upgrade requirements for a File System.

Currently, all of the methods for the file system upgrade based on the FOTA technology in the industry adopt a differential upgrade mode. That is, it is required to generate a differential upgrade package by a certain differential algorithm between a source file system and a target file system, and then upgrade the terminal device to the target file system using that differential package in the process of actual upgrade. The advantage of this mode is that the upgrade package is only related to different parts between the two versions of the file systems while the same part is not included in the range of upgrade. The upgrade package generated in such way has a relative small size and can achieve fast download and upgrade.

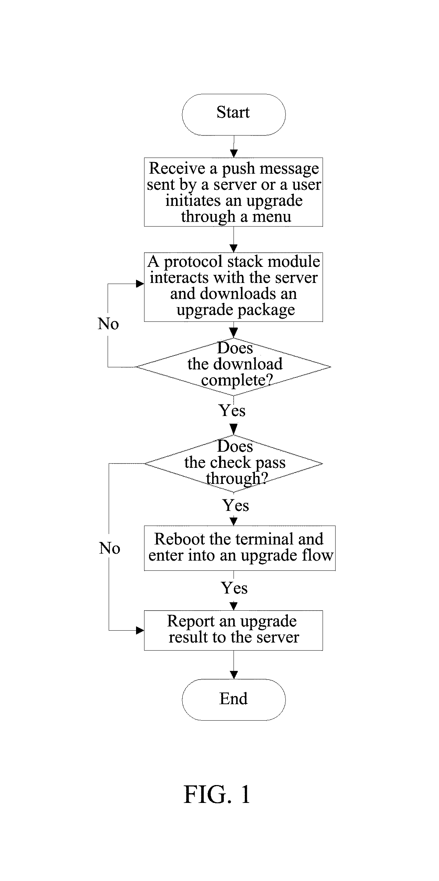

FIG. 1 is a flow chart of an upgrade scheme for a file system in the related art, and the flow comprises:
a, before upgrade, a terminal generates an upgrade package and uploads it to a server;
b, during the upgrade, the terminal is connected with the server, and the server sends the upgrade package to the terminal;
c, after parsing the upgrade package, the terminal performs the upgrade;
d, after the upgrade completes, the terminal reports an upgrade result to the server, and the process ends.

The abovementioned upgrade scheme has the following restrictions:
1) the upgrade can only be performed between the fixed source and target file systems;
2) the generated differential package takes a single file as the smallest unit, that is, the granularity size of the file which can be upgraded is one file.

The abovementioned restrictions restrict the range of file system upgrade via the OTA DM mode to a greatly extent. When some dynamic files (configuration items, such as a default network mode and a default screen-lock time length which can be changed by the end user through the UI menu, and so on) in the terminal device need to be upgraded, there will be problem that due to uncertainty of the source file system the upgrade package which is suitable for different source file systems cannot be generated, thus the upgrade cannot be implemented via the differential upgrade mode.

In summary, it can be seen that the mainstream scheme of upgrading the file system by the FOTA technology in the industry has the drawback that dynamic files cannot be upgraded.

### Summary of the Invention

The embodiment of the present invention provides a dynamic file differential upgrade method and terminal, and, an upgrade package generation method and device, to solve the problem that the file system upgrade scheme in the related art cannot meet the upgrade requirements of the dynamic file system.

To solve the abovementioned problem, the embodiment of the present invention provides an upgrade package generation method, comprising:
generating a dynamic file upgrade package according to dynamic files which need to be upgraded, wherein the dynamic file upgrade package comprises file name information, path information, and upgrade content information of each dynamic file which needs to be upgraded; and
packing the dynamic file upgrade package into an upgrade package.

Preferably, the abovementioned method may further have the following feature, the method further comprises: generating a static file upgrade package according to static files which need to be upgraded based on an existing differential algorithm, and packing the static file upgrade package to the upgrade package.

The embodiment of the present invention further provides a dynamic file differential upgrade method, comprising:
a terminal downloading an upgrade package, wherein the upgrade package comprises a dynamic file upgrade package, and the dynamic file upgrade package comprises file name information, path information, and upgrade content information of each dynamic file which needs to be upgraded;
the terminal parsing the upgrade package, obtaining the dynamic file upgrade package in the upgrade package, obtaining the file name information, the path information and the upgrade content information of each dynamic file which needs to be upgraded and writing them into a specified field; and
the terminal upgrading the corresponding dynamic files according to the information of the dynamic file upgrade package.

Preferably, the abovementioned method may further have the following feature, the method further comprises,
when parsing the upgrade package, the terminal further obtaining a static file upgrade package in the upgrade package and writing it into a specified field, and upgrading the corresponding static files according to information of the static file upgrade package.

Preferably, the abovementioned method may further have the following feature, when upgrading, first the corresponding static files are upgraded according to the information of the static file upgrade package, and then the corresponding dynamic files are upgraded according to the information of the dynamic file upgrade package.

The embodiment of the present invention further provides an upgrade packet generation device, comprising:
a dynamic file upgrade package generation unit, configured to generate a dynamic file upgrade package in accordance with dynamic files which need to be upgraded, wherein the dynamic file upgrade package comprises file name information, path information, and upgrade content information of each dynamic file which needs to be upgraded; and
a packing unit, configured to pack the dynamic file upgrade package into an upgrade package.

Preferably, the abovementioned device may further have the following feature, the device further comprises a static file upgrade package generation unit, which is configured to generate a static file upgrade package according to the static files which need to be upgraded based on an existing differential algorithm;
the packing unit is further configured to pack the static file upgrade package into the upgrade package.

The embodiment of the present invention further provides a terminal, and the terminal comprises:
a protocol stack module, configured to interact with a server and download an upgrade package; wherein the upgrade package comprises a dynamic file upgrade package, and the dynamic file upgrade package comprises file name information, path information and upgrade content information of each dynamic file which needs to be upgraded;
an upgrade package parsing module, configured to: parse the upgrade package, obtain the dynamic file upgrade package in the upgrade package, obtain the file name information, the path information and the upgrade content information of each dynamic file which needs to be upgraded and write them into a specified field; and
an upgrading module, configured to upgrade the corresponding dynamic files according to the information of the dynamic file upgrade package.

Preferably, the abovementioned terminal may further have the following feature, the upgrade package parsing module is further configured to: when parsing the upgrade package, obtain a static file upgrade package in the upgrade package and write it into a specified field;
the upgrading module is further configured to upgrade the corresponding static files according to the information of the static file upgrade package.

Preferably, the abovementioned terminal may further have the following feature, the upgrading module is configured to: when upgrading, first upgrade the corresponding static files and then upgrade the corresponding dynamic files during the upgrade.

The embodiment of the present invention introduces a dynamic file differential upgrade method to solve the problem that the dynamic files cannot be upgraded when upgrading the file system, so as to effectively expand the application scope of file system upgrade using the FOTA technology and to increase the practicality of the file system upgrade.

### Brief Description of the Drawings

FIG. 1 is a flow chart of an upgrade scheme for a file system in the related art;
FIG. 2 is a structural diagram of an FOTA upgrade system;
FIG. 3 is a structural diagram of a file system upgrade package;
FIG. 4 is a structural diagram of a dynamic file system upgrade package;
FIG. 5 is a flow chart of an upgrade scheme of the dynamic file system in accordance with an embodiment of the present invention;
FIG. 6 is a block diagram of an upgrade package generation device in accordance with an embodiment of the present invention.

### Preferred Embodiments of the Invention

To make the objectives, technical solutions and advantages of the present invention more clear and apparent, hereinafter in conjunction with the accompanying drawings, the embodiments of the present invention will be described in detail. It should be noted that, in the case of no conflict, the embodiments and features in the embodiments of the present application may be arbitrarily combined with each other.

In the embodiment of the present invention, a static file is a file which is in a terminal and is already determined when a version is released, and does not change due to factors of user using/modifying configurations. This file cannot be modified by the user through a menu and are the same for different terminals of the same version. A dynamic file refers to a file that the user can modify through a UI menu in the terminal. These files can be different in different terminals of the same version.

The dynamic files in the embodiment of the present invention comprise configuration files which can be modified by the user through a UI menu in the terminal, as well as configuration information such as a password generated by a built-in application performing a certain particular algorithm through a terminal-specific identification (such as IMEI number, etc.) in the terminal.

The embodiment of the present invention provides an upgrade package generation method, comprising:
generating a dynamic file upgrade package according to the dynamic files which need to be upgraded, wherein, the dynamic file upgrade package comprises file name information, path information and upgrade content information of each dynamic file which needs to be upgraded, and packing the dynamic file upgrade package into an upgrade package.

Wherein, the method further comprises, generating a static file upgrade package based on an existing differential algorithm according to the static files which need to be upgraded, and packing the static file upgrade package into the upgrade package.

The embodiment of the present invention further provides a dynamic file differential upgrade method, comprising:
the terminal downloading the upgrade package, the upgrade package comprises a dynamic file upgrade package, wherein the dynamic file upgrade package comprises the file name information, the path information and the upgrade content information of each dynamic file which needs to be upgraded;
the terminal parsing the upgrade package, obtaining the dynamic file upgrade package in the upgrade package, and obtaining the file name information, the path information and the upgrade content information of each dynamic file which needs to be upgraded and writing them into a specified field;
the terminal upgrades the corresponding dynamic files according to the information of the dynamic file upgrade package.

Wherein, when parsing the upgrade package, the method further comprising: obtaining the static file upgrade package in the upgrade package and write it into a specified field, and upgrade the corresponding static files according to the information of the static file upgrade package.

Wherein, the corresponding static files are first upgraded according to the information of the static file upgrade package, and then the corresponding dynamic files are upgraded according to the information of the dynamic file upgrade package.

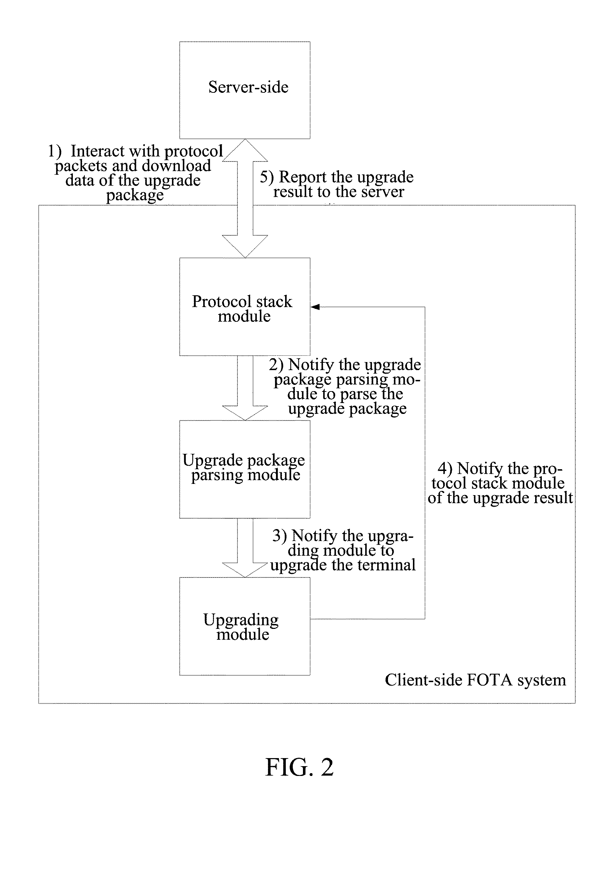

FIG. 2 is a structural diagram of a FOTA upgrade system, which is located in the terminal side and comprises a protocol stack module, an upgrade package parsing module and an upgrading module, wherein:
the protocol stack module is configured to interact with a server via protocol communication and download the upgrade package; wherein, the upgrade package comprises the dynamic file upgrade package, and the dynamic file upgrade package comprises file name information, path information, and upgrade content information of each dynamic file which needs to be upgraded;
the upgrade packet parsing module is configured to parse the upgrade package, obtain the dynamic file upgrade package in the upgrade package, and obtain the file name information, the path information and the upgrade content information of each dynamic file which needs to be upgraded and write them into the specified field; for example write it into the corresponding Flash field; and obtain the static file upgrade package in the upgrade package, and write it into the specified field;
the upgrading module is used to upgrade according to the content of the upgrade package; comprising: upgrading the corresponding dynamic files according to the information of the dynamic file upgrade package; and upgrading the corresponding static files according to the information of the static file upgrade package.

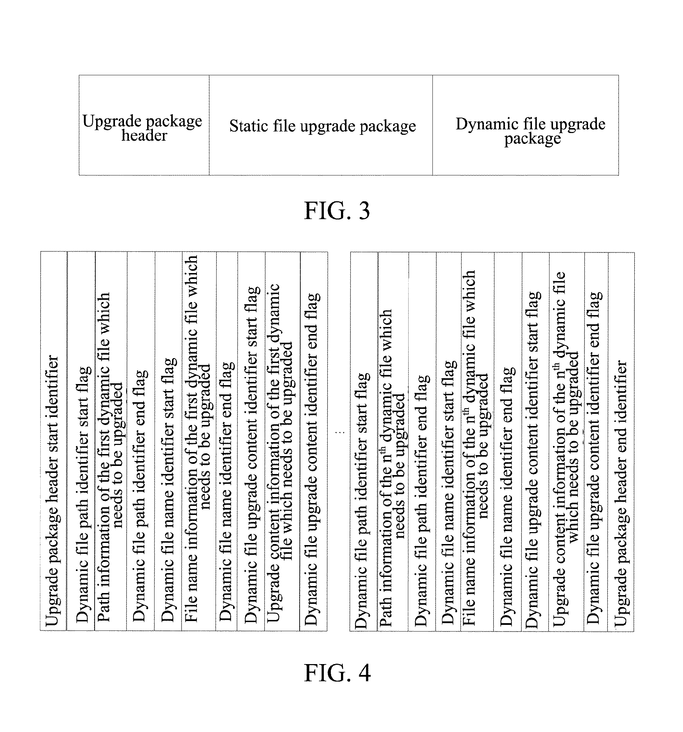

The implementation steps of the abovementioned method are as follows:
before performing the upgrade, differential packages are generated with the static files which need to be upgraded and the dynamic files which need to be upgraded respectively according to a certain way, and pack and combine the different packages into an entire file system upgrade package;
the protocol stack module downloads the upgrade package from the server to the terminal, and the structure of the upgrade package is shown in FIG. 3;
the upgrade packet parsing module parses the upgrade package, and the parsed upgrade package comprises two parts of files in the terminal, one is the differential file for upgrading the static files and the file for upgrading the dynamic files;
the device is rebooted to be upgraded, and the upgrading module is responsible for upgrading to the target file system in light of the content of the upgrade package parsed out by the terminal.

FIG. 3 is a structural diagram of a file system upgrade package. The embodiment of the present invention provides an upgrade package generation method, and the steps are as follows:
step 301: the files which need to be upgraded are divided into two classes of the static files and the dynamic files according to the actual situation of the file system which needs to be upgraded;
step 302: for the static files, the existing differential algorithm in the industry is used for performing the upgrade package calculation to generate a differential upgrade package;
step 303: for the dynamic files, a data structure shown in FIG. 4 is adopted to generate a differential upgrade package;
step 304: the differential packages generated in step 302 and step 303 are packed and combined into an entire upgrade package of the file system to be upgraded in accordance with a certain method.

FIG. 4 is a structural diagram of a dynamic file system upgrade package, which describes the data structure of the dynamic file upgrade package in detail: encapsulating and combining the information of each dynamic file which needs to be upgraded in this upgrade package in turn according to the file path, the file name, and the upgrade content information, and separating them with a predefined special identifier between different information fields, to facilitate the parsing module to parse. Of course, the order of the file path, the file name, and the upgrade content information can also be changed, which will not be limited in the present invention. In addition, the dynamic file upgrade package may further comprise other information, such as modification date.

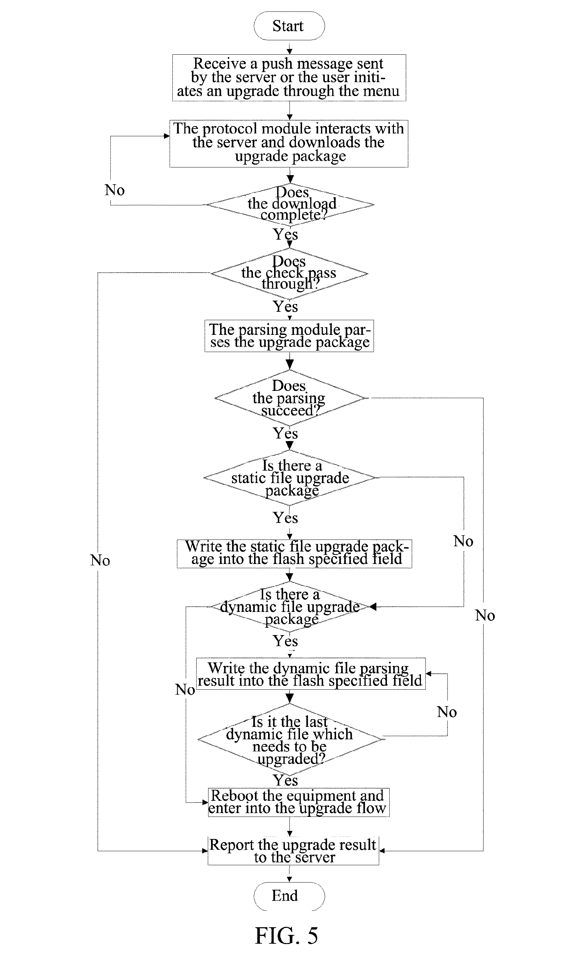

FIG. 5 is a flow chart of an upgrade scheme of the dynamic file system in accordance with the embodiment of the present invention, which illustrates an upgrade flow of the dynamic files in detail, and the steps are as follows.

Step 501: the server or the end user triggers the client-side protocol stack module to establish a data connection with the server and to download the upgrade package to the terminal.

Step 502: the upgrade package parsing module divides the upgrade package into a static file differential package *PkgA* and a dynamic file differential package *PkgB* according to the header information in the downloaded upgrade package, as shown in FIG. 3. At the same time, the two differential packages are checked, if the check of either one of the differential packages fails or the check of both fails, directly proceed to step 504.

Preferably, the parsing module, based on the package header and the mark of respective identifiers in the *PkgB,* parses the dynamic file differential package in accordance with the file path, the file name and the content that needs to be upgraded, and obtains the information required when upgrading each dynamic file. The parsed information is written into the Flash specified field and used by the upgrading module for upgrading the terminal.

Step 503: the terminal is rebooted, and the upgrading module upgrades the file system to the target file system state in accordance with the content of the differential packages. First the static files are upgraded and then the dynamic files are upgraded during the upgrade.

Step 504: the upgrade result is reported to the server, and the flow ends.

In the following, in conjunction with the accompanying drawings, an example is used to describe a differential upgrade scheme of the dynamic files provided in the embodiment of the present invention.

For example, the terminal saves a parameter of screen-lock time length in line 100 in a screen file under a folder of file system./mod/config, and the user modifies the parameter from the default 15 seconds to 10 seconds through the UI menu. After a new version is released, it needs to modify the default value of this parameter to 5 seconds. Therefore, when generating the upgrade package, it needs to edit the information, such as the path "./mod/config", the file name "screen" and the upgrade content information "line100 5second", etc., of this dynamic file according to the format shown in FIG. 4, and then encapsulate them into a dynamic file upgrade package as shown in FIG. 3. Then this dynamic file upgrade package is combined with the static file upgrade package including other static files which need to be modified into a final upgrade package, and then the final upgrade package is uploaded to the server. Finally, during the upgrade, the DM client downloads this upgrade package from the server to each terminal to parse, and performs the upgrade according to the flow shown in FIG. 5.

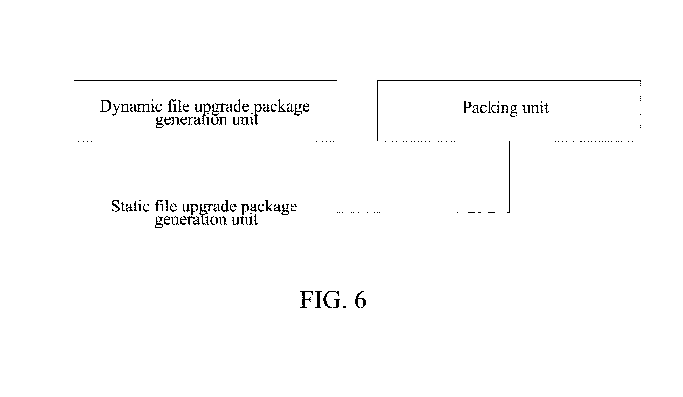

The embodiment of the present invention further provides an upgrade packet generation device, as shown in FIG. 6, comprising:
a dynamic file upgrade package generation unit, configured to generate a dynamic file upgrade package in accordance with the dynamic files which need to be upgraded, wherein, the dynamic file upgrade package comprises the file name information, the path information, and the upgrade content information of each dynamic file which needs to be upgraded;
a packing unit, configured to pack the dynamic file upgrade package to the upgrade package.

Wherein, the device further comprises a static file upgrade package generation unit, configured to generate a static file upgrade package according to the static files which need to be upgraded based on the existing differential algorithm;
the packaging unit is further configured to, pack the static file upgrade package into the upgrade package.

In summary, the dynamic file differential upgrade method in accordance with the embodiment of the present invention can solve the problem that the dynamic files cannot be upgraded in the current scheme of using the FOTA technology to perform file system upgrade.

Those ordinarily skilled in the art can understand that all or part of steps of the abovementioned method may be completed by the programs instructing the relevant hardware, and the programs may be stored in a computer-readable storage medium, such as read only memory, magnetic or optical disk. Alternatively, all or part of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

### Industrial Applicability

A dynamic file differential upgrade method is introduced in the embodiment of the present invention to solve the problem that the dynamic files cannot be upgraded when upgrading the file system, so as to effectively expand the application scope of file system upgrade using the FOTA technology and to increase the practicality of the file system upgrade.

## Claims

1. An upgrade package generation method, comprising:
generating a dynamic file upgrade package according to dynamic files which need to be upgraded, wherein the dynamic file upgrade package comprises file name information, path information, and upgrade content information of each dynamic file which needs to be upgraded; and
packing the dynamic file upgrade package into an upgrade package.

2. The method of claim 1, further comprising: generating a static file upgrade package according to static files which need to be upgraded based on an existing differential algorithm, and packing the static file upgrade package into the upgrade package.

3. A dynamic file differential upgrade method, comprising:
a terminal downloading an upgrade package, wherein the upgrade package comprises a dynamic file upgrade package, and the dynamic file upgrade package comprises file name information, path information, and upgrade content information of each dynamic file which needs to be upgraded;
the terminal parsing the upgrade package, obtaining the dynamic file upgrade package in the upgrade package, obtaining the file name information, the path information and the upgrade content information of each dynamic file which needs to be upgraded and writing them into a specified field; and
the terminal upgrading dynamic files according to the information of the dynamic file upgrade package.

4. The method of claim 3, further comprising,
when parsing the upgrade package, the terminal further obtaining a static file upgrade package in the upgrade package and writing it into a specified field, and upgrading static files according to information of the static file upgrade package.

5. The method of claim 4, wherein,
the terminal first upgrades the static files according to the information of the static file upgrade package, and then upgrades the dynamic files according to the information of the dynamic file upgrade package.

6. An upgrade packet generation device, comprising:
a dynamic file upgrade package generation unit, configured to generate a dynamic file upgrade package in accordance with dynamic files which need to be upgraded, wherein the dynamic file upgrade package comprises file name information, path information, and upgrade content information of each dynamic file which needs to be upgraded; and
a packing unit, configured to pack the dynamic file upgrade package into an upgrade package.

7. The device of claim 6, wherein, the device further comprises a static file upgrade package generation unit, which is configured to generate a static file upgrade package according to static files which need to be upgraded based on an existing differential algorithm;
the packing unit is further configured to pack the static file upgrade package into the upgrade package.

8. A terminal, wherein the terminal comprises:
a protocol stack module, configured to interact with a server and download an upgrade package; wherein the upgrade package comprises a dynamic file upgrade package, and the dynamic file upgrade package comprises file name information, path information and upgrade content information of each dynamic file which needs to be upgraded;
an upgrade package parsing module, configured to: parse the upgrade package, obtain the dynamic file upgrade package in the upgrade package, obtain the file name information, the path information and the upgrade content information of each dynamic file which needs to be upgraded and write them into a specified field; and
an upgrading module, configured to upgrade dynamic files according to the information of the dynamic file upgrade package.

9. The terminal of claim 8, wherein,
the upgrade package parsing module is further configured to: when parsing the upgrade package, obtain a static file upgrade package in the upgrade package and write it into a specified field;
the upgrading module is further configured to upgrade static files according to information of the static file upgrade package.

10. The terminal of claim 9, wherein,
the upgrading module is configured to: first upgrade the static files and then upgrade the dynamic files.
